# EUROPEAN PATENT APPLICATION

(11) **EP 4 477 323 A1**
(43) Date of publication of application: **18.12.2024**
(21) Application number: 23752856.7
(22) Date of filing: 07.02.2023
(51) Int. Cl.: B05B 12/00, B05C 11/10, B05D 1/02, B25J 13/00

(54) **INFORMATION PROCESSING DEVICE, ROBOT SYSTEM, AND PAINT QUANTITY PREDICTION METHOD**

(30) Priority: 08.02.2022 JP 2022018042
(71) Applicant: KAWASAKI JUKOGYO KABUSHIKI KAISHA, Kobe-shi, Hyogo 650-8670 (JP)
(72) Inventor: FUKUDA, Dai, Kobe-shi, Hyogo 650-8670 (JP); SHOJI, Akira, Kobe-shi, Hyogo 650-8670 (JP)
(74) Representative: Müller-Boré & Partner Patentanwälte PartG mbB
(86) International application number: PCT/JP2023/003960
(87) International publication number: WO 2023/153392

(57) **Abstract**

In an information processing device, a processor is configured to access a control program of a coating robot before the coating robot performs coating, acquire first information that is related to a coating operation of the coating robot and is set in the control program from the control program, and calculate a required coating material amount, which is a coating material amount required for coating by the coating robot, with the first information.

## Description

### CROSS-REFERENCE TO RELATED APPLICATIONS

The present application is intended to prove the priority and the profit of JP2022-018042A, which has been filed to the Japanese patent office on February 8, 2022, and is cited as a part of the present application by referring to the entire application.

### TECHNICAL FIELD

The present disclosure relates to an information processing device, a robot system, and a coating material amount prediction method.

### BACKGROUND ART

In the related art, a robot has been used for coating work of an object to be coated such as a vehicle body of an automobile. For example, JP2007-130531A discloses a coating system including a robot device, a cartridge replacement device, and a coating material filling device. The cartridge replacement device replaces a coating material cartridge with an atomization head of the robot device. A plurality of coating material filling devices are disposed corresponding to the types of coating material, and fill the same color of coating material as the filled coating material into the used coating material cartridge.

### SUMMARY OF INVENTION

For example, a plurality of types of coating material are used to coat one vehicle body. The cartridge replacement device disclosed in JP2007-130531A replaces a coating material cartridge of an atomization head according to a coating material required for a coating target region. After the coating completion of the coating target region, the coating material cartridge may be replaced in a state where the coating material remains in the coating material cartridge. The remaining coating material is discarded, and the cost required for the coating material increases.

The present disclosure provides an information processing device, a robot system, and a coating material amount prediction method capable of predicting a required coating material amount before performing coating.

An information processing device according to an aspect of the present disclosure is an information processing device including a processing circuitry. The processing circuitry is configured to: access a control program of a coating robot before the coating robot performs coating; acquire, from the control program, first information related to a coating operation of the coating robot and set in the control program; and use the first information to calculate a required coating material amount, which is a coating material amount required for coating by the coating robot.

### BRIEF DESCRIPTION OF DRAWINGS

[FIG. 1] FIG. 1 is a plan view showing an example of a configuration of a robot system according to an embodiment.
[FIG. 2] FIG. 2 is a perspective view showing an example of configurations of one pair including a coating robot and a supply device according to the embodiment.
[FIG. 3] FIG. 3 is a block diagram showing an example of functional configurations of a coating control device and a supply control device associated with each other.
[FIG. 4] FIG. 4 is a diagram showing an example in which an influence of the acceleration and deceleration of a robot arm is reflected on the required coating material amount.
[FIG. 5] FIG. 5 is a diagram showing an example in which an influence of a delay time of an operation of a control valve is reflected on the required coating material amount.
[FIG. 6] FIG. 6 is a flowchart showing an example of operations of the coating control device and the supply control device according to the embodiment.
[FIG. 7] FIG. 7 is a sequence diagram showing an example of operations of a plurality of coating control devices and a plurality of supply control devices according to the embodiment.
[FIG. 8] FIG. 8 is a sequence diagram showing an example of operations of the plurality of coating control devices and the plurality of supply control devices according to the embodiment.

### DESCRIPTION OF EMBODIMENTS

Hereinafter, exemplary embodiments of the present disclosure will be described with reference to the drawings. The embodiments described below each show a comprehensive or specific example. Among the components in the embodiments described below, the component that does not appear in an independent claim, which has the broadest scope, is described as an optional component. Each drawing in the attached drawings is a schematic drawing and is not necessarily strictly illustrated. In each of the drawings, substantially the same components are denoted by the same reference numerals, and redundant description may be omitted or simplified. In the present description and claims, the "device" may mean not only one device but also a system including a plurality of devices.

### [Configuration of Robot System]

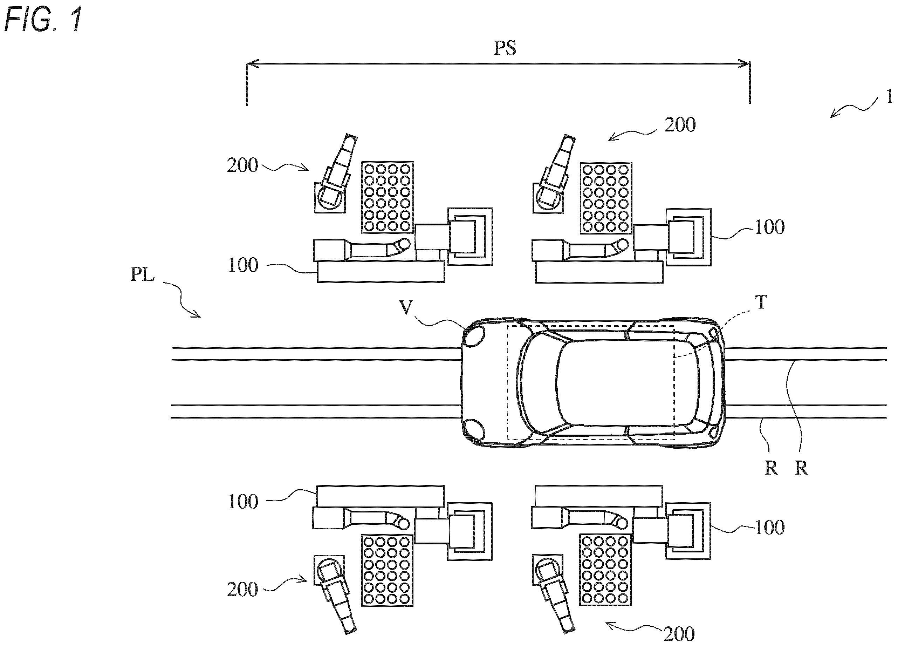

A configuration of a robot system 1 according to an embodiment will be described with reference to FIG. 1. FIG. 1 is a plan view showing an example of a configuration of the robot system 1 according to an embodiment. The robot system 1 is a system that performs coating work on an object to be coated. In the present embodiment, the object to be coated is a vehicle body V of an automobile, but is not limited thereto, and may be any object to be coated as long as the object can be coated by a robot.

In the present embodiment, the robot system 1 is disposed on a coating line PL of a vehicle body V in a manufacturing factory of an automobile. The coating line PL includes a transport device T that moves the vehicle body V along a predetermined path. The transport device T moves on a track R disposed along a predetermined path in a state where the vehicle body V is mounted.

The robot system 1 includes one or more coating robots 100 and one or more supply devices 200 disposed corresponding to the one or more coating robots 100. The one or more coating robots 100 and the one or more supply devices 200 are disposed along the coating line PL, that is, along the track R. In the present embodiment, four coating robots 100 and four supply devices 200 are disposed in a coating work section PS, but the present disclosure is not limited thereto.

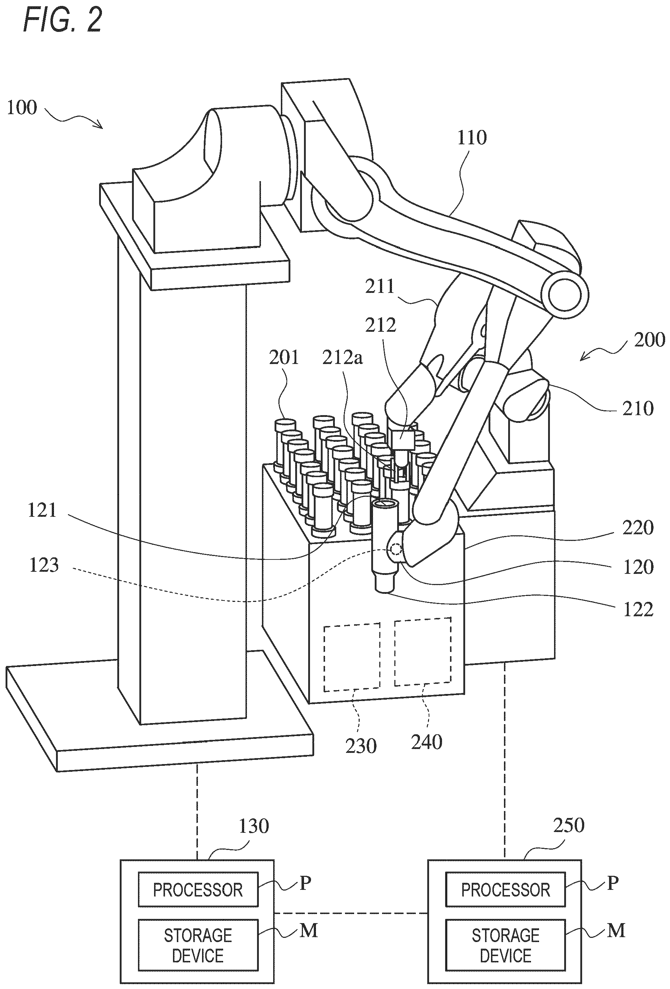

FIG. 2 is a perspective view showing an example of configurations of one pair including the coating robot 100 and the supply device 200 according to the embodiment. As shown in FIG. 2, the supply device 200 supplies coating material to the coating robot 100 set in the supply device 200. Specifically, the supply device 200 attaches and removes a cartridge 201 capable of filling and discharging coating material to and from the coating robot 100. The supply device 200 replaces the cartridge 201 with respect to the coating robot 100. Further, the supply device 200 can hold a plurality of cartridges 201 and fill the held cartridges 201 with coating material.

The supply device 200 includes a replacement robot 210, a holding table 220, a filling device 230, a cleaning device 240, and a supply control device 250. The holding table 220 holds and accommodates the plurality of cartridges 201 in a state where upper portions of the cartridges 201 are exposed. The holding table 220 holds the plurality of cartridges 201 such that the cartridges 201 can be stored and removed by the access from outside and above. In the present embodiment, the cartridge 201 has a cylindrical shape, and may have any shape.

In the present specification and claims, "upper" and "lower" related to each component of the robot system 1 respectively mean "upper" and "lower" along a direction perpendicular to a horizontal plane when the component is disposed on the horizontal plane.

The filling device 230 fills coating material into each of the plurality of cartridges 201 held by the holding table 220. The filling device 230 fills the designated cartridges 201 with a designated type of coating material in the designated amount under the control of the supply control device 250. The filling device 230 is connected to a plurality of coating material tanks having different types of coating material. The filling device 230 is disposed in the holding table 220, accesses each of the cartridges 201 from below, establishes a connection with the cartridge 201, and injects the coating material into the cartridge 201 through a connection portion. For example, the type of the coating material may be based on the type of solvent or powder of the coating material, the type of resin as a raw material of the coating material, the type of color of the coating material, and the like. An access direction of the filling device 230 to the cartridge 201 is not limited to the above. A structure of the filling device 230 may be any known structure. For example, the filling device 230 may include a device capable of pumping a liquid or a gas, such as an electric or hydraulic pump, a pneumatic or hydraulic cylinder, or a compressor.

The cleaning device 240 extracts the remaining coating material from the cartridge 201 held by the holding table 220 and cleans the cartridge 201. The cleaning device 240 extracts and cleans the coating material for the designated cartridge 201 under the control of the supply control device 250. The cleaning device 240 is disposed in the holding table 220, accesses the cartridge 201 from below, establishes a connection with the cartridge 201, and extracts and cleans coating material through the connection portion. An access direction of the cleaning device 240 to the cartridge 201 is not limited to the above. A structure of the cleaning device 240 may be any known structure. The cleaning device 240 and the filling device 230 may be integrated into one device. For example, the cleaning device 240 may include a device capable of pumping or sucking a liquid or a gas or capable of pumping and sucking a liquid or a gas, such as an electric or hydraulic pump, a pneumatic or hydraulic cylinder, or a compressor.

The replacement robot 210 attaches the cartridge 201 held on the holding table 220 to the coating robot 100, removes the cartridge 201 from the coating robot 100, and stores the cartridge 201 on the holding table 220. Under the control of the supply control device 250, the replacement robot 210 attaches the designated cartridge 201 to the coating robot 100 and stores the cartridge 201 removed from the coating robot 100 at a designated position of the holding table 220.

Although not limited, in the present embodiment, the replacement robot 210 includes a robot arm 211 and an end effector 212. The end effector 212 is attached to a distal end of the robot arm 211. The end effector 212 has a structure for gripping the cartridge 201, and includes two or more finger-like members 212a for gripping the cartridge 201. The end effector 212 can grip and release the grip of the cartridge 201 by operating the finger-like members 212a. A structure of the end effector 212 is not limited to the above, and may be any structure capable of holding and releasing the cartridge 201, and for example, may be a structure using suction, adhesion, fitting, or screwing for holding.

The robot arm 211 is an articulated robot arm having two or more joints, and in the present embodiment, the robot arm 211 has six joints and can freely move a position and a posture of the end effector 212. The robot arm 211 includes two or more servomotors that drive two or more joints, and the end effector 212 includes one or more servomotors that drive the finger-like members 212a. The servomotors of the robot arm 211 and the end effector 212 are connected to the supply control device 250, and an operation of each servomotor is controlled by the supply control device 250. Accordingly, operations of the robot arm 211 and the end effector 212 are controlled by the supply control device 250.

The coating robot 100 includes a robot arm 110, an end effector 120, and a coating control device 130. The end effector 120 is attached to a distal end of the robot arm 110. The end effector 120 has a structure in which the cartridge 201 can be attached and detached and a structure in which the coating material in the attached cartridge 201 is sprayed in the form of mist. The end effector 120 includes a receiving hole 121, an injection nozzle 122, and a control valve 123, but the components of the end effector 120 are not limited thereto. The end effector 120 may have a structure for spraying the coating material in the mounted cartridge 201. The end effector 120 and the injection nozzle 122 are examples of a coating material discharge unit.

The receiving hole 121 is a hole through which the cartridge 201 can be inserted and pulled out. The injection nozzle 122 is connected to the receiving hole 121 in a manner of allowing fluid communication. The injection nozzle 122 is connected to the cartridge 201 inserted into the receiving hole 121 in a manner of allowing fluid communication.

The end effector 120 is connected to an air pumping device outside the coating robot 100 via a pipe. The injection nozzle 122 is connected to a gas pumping device connected to the end effector 120 in a manner of allowing fluid communication. The injection nozzle 122 has a structure in which the coating material in the cartridge 201 is atomized and sprayed to the outside by an action of compressed gas supplied from the gas pumping device. The gas pumping device may be any device that can supply compressed gas such as compressed air, and may include, for example, an electric pump, a hydraulic pump, or a compressor.

The control valve 123 is disposed in a gas path between the injection nozzle 122 and the gas pumping device, and controls the supply of the compressed gas to the injection nozzle 122. The control valve 123 may be an on-off valve that operates to supply and interrupt the supply of the compressed gas to the injection nozzle 122, or may be an adjustment valve that adjusts a flow rate of the compressed gas to the injection nozzle 122. Although not limited, in the present embodiment, the control valve 123 is a valve that operates electrically, and is, for example, an electromagnetic valve. Although the control valve 123 is disposed on the end effector 120 in the present embodiment, the control valve 123 may be disposed at a position away from the end effector 120, and for example, may be disposed on a pipe connecting the end effector 120 and the gas pumping device.

The robot arm 110 is an articulated robot arm having two or more joints, and in the present embodiment, the robot arm 110 has six joints and can freely move a position and a posture of the end effector 120. The robot arm 110 includes two or more servomotors that drive two or more joints. The servomotors of the robot arm 211 and the control valve 123 of the end effector 120 are connected to the coating control device 130, and the operations of the servomotors and the control valve 123 are controlled by the coating control device 130.

The coating control device 130 and the supply control device 250 are connected to each other via wired communication, wireless communication, or a combination thereof. Any wired communication or wireless communication may be used. Each of the coating control device 130 and the supply control device 250 may have a function of controlling a control target, a function of supplying power to the control target, and both of these functions, and in the present embodiment, each of the coating control device 130 and the supply control device 250 has both functions. Each of the coating control device 130 and the supply control device 250 includes a processing circuitry, a circuit, or a combination thereof, and in the present embodiment, each of the coating control device 130 and the supply control device 250 includes a processing circuitry and a circuit. Each of the coating control device 130 and the supply control device 250 includes a processing circuitry or a computer implemented by a combination of the processing circuitry and the circuit. The circuit may include a processing circuitry.

The processing circuitry or the circuit includes a processor P, a storage device M, and the like. The processing circuitry or the circuit transmits and receives a command, information, data, and the like to and from other devices. The processing circuitry or the circuit inputs a signal from various devices and outputs a control signal to a control target. Further, the circuit includes an amplifier, an inverter, a converter, or a combination thereof, and controls power supply to a power supply target.

The storage device M may include a memory, a storage, or both a memory and a storage. Examples of the memory may include a random access memory (RAM) which is a volatile semiconductor memory and a read-only memory (ROM) which is a nonvolatile semiconductor memory. Examples of the storage may include a semiconductor memory such as a flash memory, a hard disk, and a solid state drive (SSD). For example, the storage device M stores a program to be executed by the processing circuitry or the circuit, various types of data, and the like. The storage device M is an example of a storage unit. In the present specification and claims, a range included in the term "memory" includes the above-described memory, and may also include the above-described storage. A range included in the term "storage" includes the storage as described above, and may also include the memory as described above.

At least a part of a plurality of functions of the coating control device 130 and the supply control device 250 may be implemented by cooperation of the processor P, the memory, the storage, and the like. The processor P and the memory including the RAM and the ROM form a computer system. For example, the computer system may implement the above functions by the processor P executing a program recorded in the ROM using the RAM as a work area.

A part or all of the functions of the coating control device 130 and the supply control device 250 may be implemented by the computer system, may be implemented by a dedicated hardware circuit such as an electronic circuit or an integrated circuit, or may be implemented by a combination of the computer system and the hardware circuit. Both the coating control device 130 and the supply control device 250 may perform a process by centralized control by a single computer or by distributed control by cooperation of a plurality of computers. A part or the whole of the coating control device 130 is an example of an information processing device.

Without being limited, the processor P may include, for example, one or more of a central processing unit (CPU), a micro processing unit (MPU), a graphics processing unit (GPU), a microprocessor, a processor core, a multiprocessor, an application-specific integrated circuit (ASIC), a field programmable gate array (FPGA), and a reconfigurable processor. The processor P may implement processing by a logic circuit or a dedicated circuit which is a hardware circuit formed in an integrated circuit such as an integrated circuit (IC) chip and a large scale integration (LSI). The plurality of functions of the coating control device 130 and the supply control device 250 may be implemented by an integrated circuit that is individually integrated into one chip, or may be implemented by an integrated circuit that is integrated into one chip so as to include a part or all of the functions.

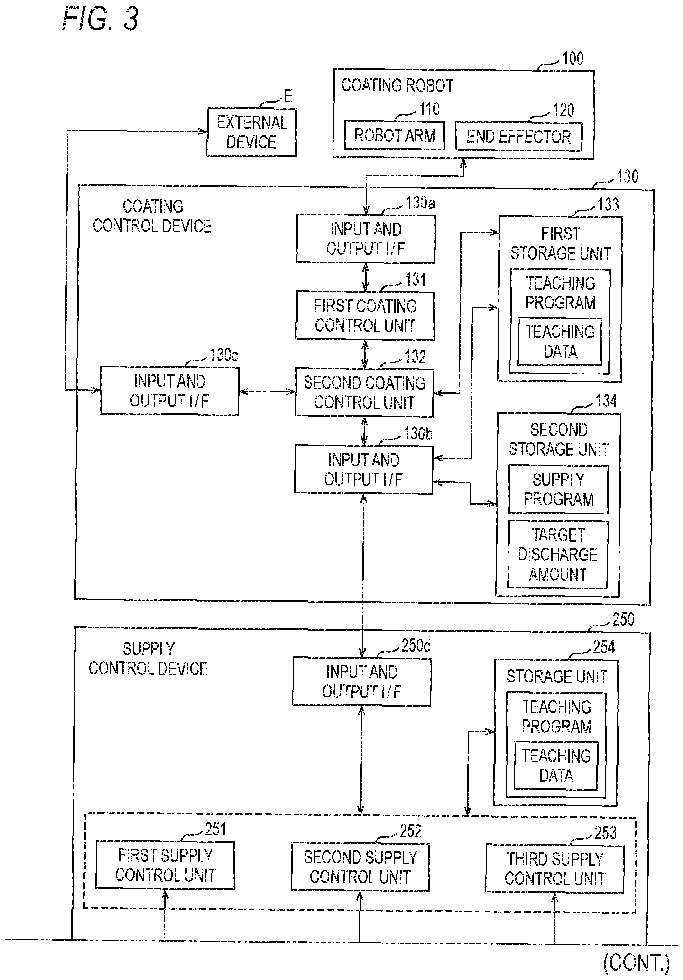

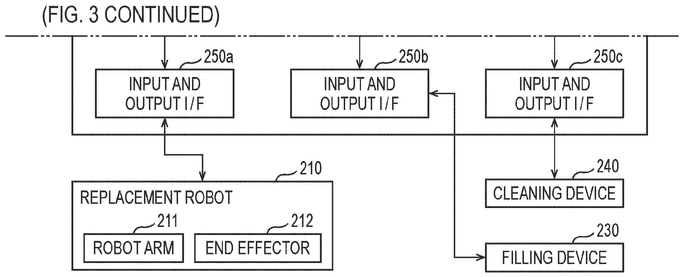

A functional configuration of a combination of one coating control device 130 and one supply control device 250 corresponding thereto will be described. FIG. 3 is a block diagram showing an example of functional configurations of the coating control device 130 and the supply control device 250 associated with each other. As shown in FIG. 3, the coating control device 130 includes input and output interfaces (I/F) 130a, 130b, and 130c, and the supply control device 250 includes input and output interfaces I/F 250a, 250b, 250c, and 250d.

The coating control device 130 is connected to the coating robot 100 via the input and output I/F 130a, connected to the input and output I/F 250d of the supply control device 250 via the input and output I/F 130b, and connected to an external device E via the input and output I/F 130c. The supply control device 250 is connected to a replacement robot 210 via the input and output I/F 250a, connected to the filling device 230 via the input and output I/F 250b, connected to the cleaning device 240 via the input and output I/F 250c, and connected to the input and output I/F 130b of the coating control device 130 via the input and output I/F 250d. Each connection may be wired communication, wireless communication, or a combination thereof. The wired communication and the wireless communication may be any communication.

The coating control device 130 includes a first coating control unit 131, a second coating control unit 132, a first storage unit 133, and a second storage unit 134 as functional components. The supply control device 250 includes a first supply control unit 251, a second supply control unit 252, a third supply control unit 253, and a storage unit 254 as functional components.

The functions of the coating control units 131 and 132 may be implemented by the processor P and the storage device M of the coating control device 130. The functions of the storage units 133 and 134 can be implemented by the storage device M of the coating control device 130. The functions of the supply control units 251 to 253 may be implemented by the processor P and the storage device M of the supply control device 250. The function of the storage unit 254 may be implemented by the storage device M of the supply control device 250. The coating control device 130 is an example of a robot controller.

The storage units 133 and 134 of the coating control device 130 store various types of information, data, and the like, and enable reading of the stored information, data, and the like. The first storage unit 133 stores control programs of the robot arm 110 and the end effector 120, and specification data of the robot arm 110 and the end effector 120. The specification data of the robot arm 110 and the end effector 120 may include information on various elements such as performances, functions, forms, and shapes of the robot arm 110 and the end effector 120.

The control program is a computer program for causing the robot arm 110 and the end effector 120 to autonomously perform a predetermined operation, and is executed by the first coating control unit 131. Although not limited, in the present embodiment, the predetermined operation is a teaching operation set by teaching the coating control device 130. Therefore, the control program is a teaching program including teaching data. The teaching program receives the setting of the teaching data and causes the robot arm 110 and the end effector 120 to perform the teaching operation using the set teaching data.

The teaching data may be formed in a process of teaching the operations of the robot arm 110 and the end effector 120 to the coating control device 130. The teaching may be teaching performed by actually moving the robot arm 110 and the end effector 120 directly or using a teaching device such as a teach pendant, or may be teaching virtually performed on a computer. The teaching data can be changed after being once formed.

The teaching data includes information on a plurality of teaching points. The plurality of teaching points are ordered in time series. The information on each teaching point includes information on a target position and a target posture of the end effector 120 at the teaching point, and information on a target movement direction and a target movement speed of the end effector 120 from the teaching point to the next teaching point. The information on the target position and the target posture of the end effector 120 is an example of first teaching information. The information on the target movement direction and the target movement speed of the end effector 120 is an example of second teaching information. The information on the teaching points may include information on a target movement path between teaching points such as a target movement path of the end effector 120 from the teaching point to the next teaching point.

The second storage unit 134 stores a supply program for controlling supply of coating material and information on a target discharge amount. The information on a target discharge amount includes information on a target discharge amount of coating material discharged from the injection nozzle 122 of the end effector 120 at a teaching point, a path connecting the plurality of teaching points, or both the teaching point and the path. Hereinafter, the path connecting the plurality of teaching points is also referred to as a "teaching point path". The target discharge amount at the teaching point is a target discharge amount from the teaching point to the next teaching point. The target discharge amount in the teaching point path is a target discharge amount from a start point to an end point of the teaching point path. The target discharge amount may be constant or may change between the teaching point and the next teaching point and between the start point and the end point of the teaching point path. The information on the target discharge amount may be included in the information on the teaching points.

The information on the target discharge amount is information indicating a target discharge amount, and may include, for example, a target discharge amount per unit time of coating material, a target level of a discharge amount of coating material, or both the target discharge amount per unit time of coating material and the target level of a discharge amount of coating material. Hereinafter, the target discharge amount per unit time is also referred to as a "target time discharge amount". For example, the target level may correspond to a discharge amount, a discharge pressure, or both the discharge amount and the discharge pressure. When the information on the target discharge amount includes the information on the target level, various target levels of the discharge amount, information on an influencing element that influences the discharge amount, and various target time discharge amounts may be stored in the second storage unit 134 in advance in association with each other. Examples of an influencing element may include the viscosity, temperature, and humidity of the coating material. For example, various combinations of the target level of the discharge amount and a numerical value or level of the influencing element, and the target time discharge amount corresponding to each of the combinations may be stored in the second storage unit 134 in association with each other.

The supply program is a computer program executed by the second coating control unit 132. The supply program includes a program for calculating a required coating material amount in a predetermined coating region. The required coating material amount in the predetermined coating region is a coating material amount required for coating the predetermined coating region by the robot arm 110 and the end effector 120.

The first coating control unit 131 controls the operations of the robot arm 110 and the end effector 120 of the coating robot 100 according to the teaching program. Specifically, the first coating control unit 131 controls operations of the servomotors of the robot arm 110 and the end effector 120 and an operation of the control valve 123 of the end effector 120. The first coating control unit 131 controls the operations of the servomotors and the control valve 123 according to the teaching program so that the robot arm 110 and the end effector 120 perform the teaching operation according to the teaching data. The first coating control unit 131 may also control power supply to the servomotors and the control valve 123.

The first coating control unit 131 outputs information indicating operation states of the robot arm 110 and the end effector 120 to the second coating control unit 132. For example, the information may be information indicating operation states of the servomotors of the robot arm 110 and the end effector 120 and the control valve 123. The information indicating the operation states of the servomotors and the control valve 123 may be an operation command output to the servomotors and the control valve 123, or may be information on an operation fed back from the servomotors and the control valve 123. The information indicating the operation states of the robot arm 110 and the end effector 120 may be information indicating a process being performed, a process already performed, or a combination thereof in the teaching program.

When the coating in the predetermined coating region is completed, the first coating control unit 131 outputs a command to replace the cartridge 201 of the end effector 120 to the supply control device 250 in order to coat a next predetermined coating region. The command may include coating material information including a type of coating material and a required coating material amount in the next predetermined coating region. The supply device 200 can select the cartridge 201 suitable for the coating material information from the cartridges 201 held by the holding table 220, and replace the cartridge 201 of the end effector 120 with the selected cartridge 201.

The second coating control unit 132 controls the supply of the coating material from the supply device 200 to the coating robot 100 in accordance with a supply program based on the information indicating the operation states of the robot arm 110 and the end effector 120 received from the first coating control unit 131. Further, the second coating control unit 132 performs at least the prediction of the required coating material amount among the prediction of the required coating material amount in the predetermined coating region, the change of the teaching data stored in the first storage unit 133, and the setting of the information on the target discharge amount stored in the second storage unit 134. The predetermined coating region is a region to be coated by the coating robot 100. For example, the predetermined coating region may be a region in which the coating robot 100 performs coating in one coating work, a region in which the coating robot 100 performs coating using the same type of coating material, a region in which the coating robot 100 performs coating using coating material in one cartridge 201, or a combination thereof. The teaching point is associated with the predetermined coating region.

Before the coating robot 100 performs coating in the predetermined coating region, the second coating control unit 132 calculates a required coating material amount in the coating region. Before the coating robot 100 performs coating in the predetermined coating region, the second coating control unit 132 outputs information including the calculated required coating material amount and the type of coating material corresponding to the required coating material amount to the supply control device 250. Before the coating robot 100 performs coating in the predetermined coating region, the second coating control unit 132 may output, to the supply control device 250, a command to supply the above-described type of coating material in a required coating material amount to the coating robot 100. Further, the supply control device 250 may be configured to receive information on the operation state of the coating robot 100 from the first coating control unit 131 or the second coating control unit 132. After receiving the information including the required coating material amount and the type of the coating material from the second coating control unit 132, the supply control device 250 may execute control of filling the cartridge 201 with the type of coating material in the required coating material amount in accordance with the progress of the operation of the coating robot 100. The second coating control unit 132 may output the required coating material amount and the type of the coating material to the first coating control unit 131 in association with the predetermined coating region. Details of a process of calculating the required coating material amount by the second coating control unit 132 will be described later.

The second coating control unit 132 can receive input of information of either or both of the teaching data and the target discharge amount from various devices. For example, the device may be an input device included in the coating control device 130 or may be an external device E outside the coating control device 130. The external device E is connected to the coating control device 130 via the input and output I/F 130c. Examples of the external device E may include an input device, a computer device, and a storage device.

The input device includes an input element that receives an input by an operator or the like, and outputs a signal indicating an input content to the input element. Examples of the input element may include a slide switch, a button switch, a key, a lever, a joystick, a touch panel, a microphone, a camera, or a combination thereof. Examples of the computer device may include a smart device such as a personal computer, a smartphone, and a tablet computer. Examples of the storage device may include a storage medium such as a flash memory, a hard disk, and an SSD.

When the second coating control unit 132 receives an input of information to be changed from the teaching data, the second coating control unit 132 may replace the corresponding information in the teaching data stored in the first storage unit 133 with the received information and update the teaching data stored in the first storage unit 133. The second coating control unit 132 enables setting of any information in the teaching data. The information to be changed from the teaching data may be input by a method similar to teaching work or a method other than the teaching work.

When the second coating control unit 132 receives an input of the information on the target discharge amount, the second coating control unit 132 may replace the information on the target discharge amount stored in the second storage unit 134 with the received information on the target discharge amount and update the information on the target discharge amount stored in the second storage unit 134. The information on the target discharge amount is an example of second information. The second coating control unit 132 enables setting of any target discharge amount. The second coating control unit 132 can receive an input of information on the target discharge amount in relation to a teaching point, a teaching point path, or both the teaching point and the teaching point path.

The second coating control unit 132 can receive an input of the target time discharge amount or the target level of the discharge amount as the information on the target discharge amount. When the target level is used, the second coating control unit 132 receives the input of the numerical value or the level of the influencing element together with the target level. The second coating control unit 132 searches the second storage unit 134 to extract a target time discharge amount corresponding to the combination of the target level and the numerical value or the level of the influencing element, and stores the extracted target time discharge amount in the second storage unit 134 as information on the target discharge amount in a state of being associated with the target level.

A detailed example of a process of calculating the required coating material amount in a predetermined coating region will be described. Before the coating robot 100 performs coating in the predetermined coating region, the second coating control unit 132 accesses a teaching program stored in the first storage unit 133, and acquires teaching data via the teaching program. The second coating control unit 132 may accessing the teaching program and acquire the teaching data without causing the first coating control unit 131 to execute the control of causing the coating robot 100 to perform coating in the predetermined coating region. The second coating control unit 132 acquires information on a teaching point corresponding to the predetermined coating region.

Further, the second coating control unit 132 accesses information on the target discharge amount stored in the second storage unit 134 and acquires information on the target discharge amount corresponding to the predetermined coating region. For example, the second coating control unit 132 acquires information on target discharge amounts at the plurality of teaching points corresponding to the predetermined coating region. Further, the second coating control unit 132 acquires specification data of the robot arm 110 and the end effector 120 from the first storage unit 133.

The second coating control unit 132 calculates the required coating material amount required for coating between the teaching points for each pair of teaching points adjacent to each other in time series, using the information of each teaching point and the information on the target discharge amount corresponding to the teaching point. For example, when calculating a required coating material amount AP1 between a first teaching point TP1 and a second teaching point TP2 adjacent to each other in time series, the second coating control unit 132 calculates a discharge time T1 of the coating material from the injection nozzle 122 between the first teaching point TP1 and the second teaching point TP2. The second teaching point TP2 is a teaching point next to the first teaching point TP1 in time series.

The second coating control unit 132 uses information on a target position of the end effector 120 set at the first teaching point TP1 and the second teaching point TP2 and information on a target movement speed VT1 of the end effector 120 set at the first teaching point TP1 to calculate the discharge time T1. The second coating control unit 132 may calculate the discharge time T1 by calculating a distance L1 between a target position of the first teaching point TP1 and a target position of the second teaching point TP2 and dividing the distance L1 by the target movement speed VT1. The discharge time T1 is a time period during which the coating material is continuously discharged from the first teaching point TP1 to the second teaching point TP2. The discharge time T1 is also a time for which the control valve 123 is kept open state. The second coating control unit 132 calculates the required coating material amount AP1 by multiplying a target discharge amount DA1 at the first teaching point TP1 by the discharge time T1. The second coating control unit 132 may perform a process up to the calculation of the required coating material amount in the predetermined coating region without causing the first coating control unit 131 to execute the control of causing the coating robot 100 to perform coating in the predetermined coating region.

For example, when a movement speed or a movement direction of the end effector 120 changes at a teaching point or between teaching points, the second coating control unit 132 may reflect an influence of the acceleration and deceleration of the end effector 120 in the calculation of the required coating material amount. At this time, the second coating control unit 132 reads specification data of the robot arm 110 from the first storage unit 133, and acquires information on the robot arm 110 related to the acceleration and deceleration when the robot arm 110 moves the end effector 120. That is, the second coating control unit 132 acquires information on the acceleration and deceleration at which the robot arm 110 can move the end effector 120, and uses the acquired information in the calculation of the required coating material amount. Hereinafter, the information on the acceleration and deceleration is also referred to as "information on the acceleration and deceleration of the robot arm 110".

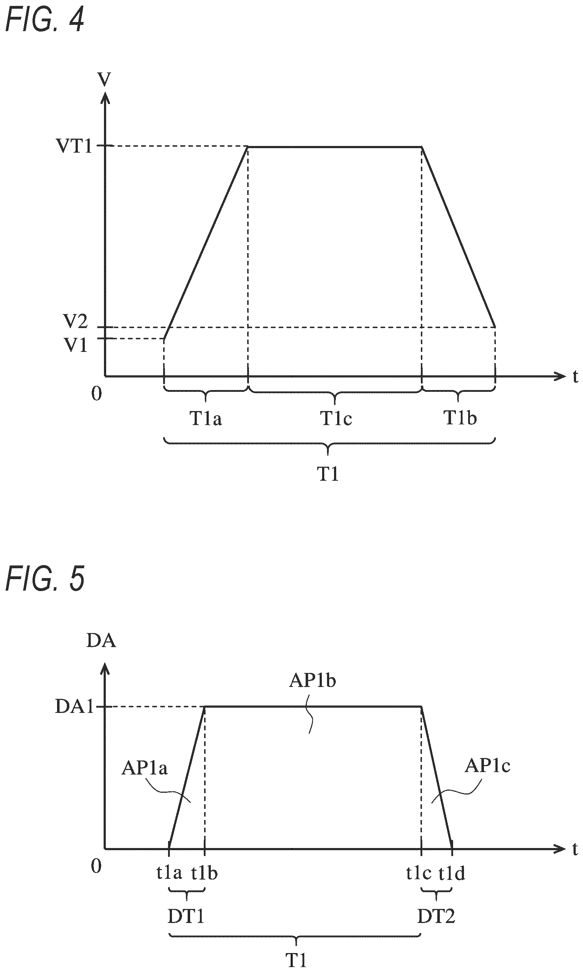

For example, in the case shown in FIG. 4, the second coating control unit 132 uses the information on the acceleration and the deceleration of the robot arm 110. FIG. 4 is a diagram showing an example in which an influence of the acceleration and deceleration of the robot arm 110 is reflected on the required coating material amount. In the case shown in FIG. 4, since a movement speed V1 of the end effector 120 at the time of reaching the first teaching point TP1 is lower than the target movement speed VT 1, acceleration from the first teaching point TP 1 is required. Further, since a movement speed V2 of the end effector 120 at the time of reaching the second teaching point TP2 is lower than the target movement speed VT1, deceleration for reaching to the second teaching point TP2 is required.

In this case, the second coating control unit 132 calculates a first movement distance L1a and a first elapsed time T1a of the end effector 120 until the movement speed of the end effector 120 reaches the target movement speed VT1 from the movement speed V1. The second coating control unit 132 calculates a second movement distance L1b and a second elapsed time T1b of the end effector 120 until the movement speed of the end effector 120 reaches the movement speed V2 from the target movement speed VT1. The second coating control unit 132 calculates a distance L1c (L1c = L1 - L1a - L1b) by subtracting the first movement distance L1a and the second movement distance L1b from the distance L1 between the first teaching point TP1 and the second teaching point TP2, and calculates a third elapsed time T1c by dividing the distance L1c by the target movement speed VT1.

The second coating control unit 132 determines a total time T1d (T1d = T1a + T1b + T1c) of the elapsed times T1a, T1b, and T1c as the discharge time T1. The second coating control unit 132 calculates the required coating material amount AP1 by multiplying the target discharge amount DA1 at the first teaching point TP1 by a discharge time T1d (Td = T1).

Even in a case where acceleration of the end effector 120 is required at one or both of the first teaching point TP1 and the second teaching point TP2, a case where deceleration of the end effector 120 is required at one or both of the first teaching point TP1 and the second teaching point TP2, and a case where acceleration is required at one of the first teaching point TP1 and the second teaching point TP2 and deceleration is required at the other teaching point, the second coating control unit 132 can similarly calculate the discharge time T1 in consideration of acceleration and deceleration.

For example, the second coating control unit 132 may reflect an influence of a delay time of an operation of the control valve 123 on the calculation of the required coating material amount. At this time, the second coating control unit 132 reflects the first delay time, the second delay time, or both the first delay time and the second delay time. Information on the first delay time and the second delay time is stored in advance in the first storage unit 133, the second storage unit 134, or both the first storage unit 133 and the second storage unit 134.

The first delay time is a time from when a command to start discharge of the coating material is issued to when the injection nozzle 122 discharges the coating material. For example, the first delay time may be a time from a time point at which the first coating control unit 131 outputs a command for a valve opening operation to the control valve 123 to a time point at which the control valve 123 performs the valve opening operation. The command for the valve opening operation is a command to start discharge of the coating material. The time point at which the control valve 123 performs the valve opening operation may be any timing from a start time point of the valve opening operation to a completion time point of the valve opening operation. The first delay time may include a time required for the valve opening operation of the control valve 123.

The second delay time is a time from when a command to stop discharge of the coating material is issued to when the injection nozzle 122 stops discharging the coating material. For example, the second delay time may be a time from a time point at which the first coating control unit 131 outputs a command for a valve closing operation to the control valve 123 to a time point at which the control valve 123 performs the valve closing operation. The command for the valve closing operation is a command to stop discharge of the coating material. The time point at which the control valve 123 performs the valve closing operation may be any timing from a start time point of the valve closing operation to a completion time point of the valve closing operation. The second delay time may include a time required for the valve closing operation of the control valve 123.

For example, when the control valve 123 performs the valve opening operation between the first teaching point TP1 and the second teaching point TP2, the second coating control unit 132 may calculate the required coating material amount AP1 in consideration of the first delay time. When the control valve 123 performs the valve closing operation between the first teaching point TP1 and the second teaching point TP2, the second coating control unit 132 may calculate the required coating material amount AP1 in consideration of the second delay time.

For example, in the case shown in FIG. 5, the second coating control unit 132 reflects both a first delay time DT1 and a second delay time DT2 on the calculation of the required coating material amount. FIG. 5 is a diagram showing an example in which the influence of the delay time of the operation of the control valve 123 is reflected on the required coating material amount. In the case of FIG. 5, the control valve 123 performs the valve opening operation at the first teaching point TP1, and the control valve 123 performs the valve closing operation at the timing of reaching the second teaching point TP2.

In this case, for the first delay time DT1, a time point at which the control valve 123 performs the valve opening operation is a completion time point of the valve opening operation. For the second delay time DT2, a time point at which the control valve 123 performs the valve closing operation is a completion time point of the valve closing operation. The first delay time DT1 and the second delay time DT2 are stored in the first storage unit 133.

The second coating control unit 132 reads the first delay time DT1 and the second delay time DT2 from the first storage unit 133, and reads the target discharge amount DA1 at the first teaching point TP1 from the second storage unit 134. The second coating control unit 132 calculates the required coating material amount AP1 between the first teaching point TP1 and the second teaching point TP2 using the first delay time DT1, the second delay time DT2, the target discharge amount DA1, and the discharge time T1 between the first teaching point TP1 and the second teaching point TP2 calculated as described above.

The second coating control unit 132 calculates a first required coating material amount AP1a, a second required coating material amount AP1b, and a third required coating material amount AP1c. The first required coating material amount AP1a is a required coating material amount from a start time point t1a of the discharge time T1 to an elapsed time point tlb of the first delay time DT1. The second required coating material amount APlb is a required coating material amount from the elapsed time point tlb of the first delay time DT1 to an end time point t1c of the discharge time T1. The third required coating material amount AP1c is a required coating material amount from the end time point t1c of the discharge time T1 to an elapsed time point tld of the second delay time DT2. The second coating control unit 132 determines a total AP1d (AP1d = AP1a + AP1b + AP1c) of the required coating material amounts AP1a, AP1b, and AP1c as the required coating material amount AP 1.

For example, the second coating control unit 132 may calculate, as the first required coating material amount AP1a, such a required coating material amount that a target discharge amount gradually increases from zero to DA1 between the time point t1a and the time point tlb. A relation between an increase amount of the target discharge amount and an elapsed time may be a linear relation as drawing a straight line, or may be a non-linear relation as drawing a curve. In FIG. 5, the relation is a proportional relation. For example, in order to consider a time from the output of the command for the valve opening operation to the reception of the command by the control valve 123, the second coating control unit 132 may set the target discharge amount to zero in a part from the time point tla to the time point tlb. Alternatively, the second coating control unit 132 may calculate, as the first required coating material amount AP1a, such a required coating material amount that the target discharge amount is constant at a value lower than DA1 from the time point tla to the time point tlb.

The second coating control unit 132 calculates, as the second required coating material amount AP1b, such a required coating material amount that the target discharge amount is constant at DA1 from the time point tlb to the time point t1c.

For example, the second coating control unit 132 may calculate, as the third required coating material amount AP1c, such a required coating material amount that the target discharge amount gradually decreases from DA1 to zero between the time point t1c and the time point t1d. A relation between a decrease amount of the target discharge amount and an elapsed time may be a linear relation as drawing a straight line, or may be a non-linear relation as drawing a curve. In FIG. 5, the relation is a proportional relation. For example, in order to consider a time from the output of the command for the valve closing operation to the reception of the command by the control valve 123, the second coating control unit 132 may set the target discharge amount to DA1 in a part from the time point t1c to the time point t1d. Alternatively, the second coating control unit 132 may calculate, as the third required coating material amount AP1c, such a required coating material amount that the target discharge amount is constant at a value lower than DA1 from the time point t1c to the time point tld.

The second coating control unit 132 may reflect both an influence of the acceleration and deceleration of the end effector 120 before and after the teaching point and an influence of the delay time of the operation of the control valve 123 on the calculation of the required coating material amount. The second coating control unit 132 may calculate a required coating material amount in consideration of the influence of the delay time of the operation of the control valve 123 using the discharge time T1 in consideration of the influence of the acceleration and deceleration of the end effector 120 with respect to the required coating material amount AP1 between the first teaching point TP1 and the second teaching point TP2.

The second coating control unit 132 calculates a required coating material amount between the teaching points of the pair on all pairs of teaching points adjacent in time series among the teaching points corresponding to a predetermined coating region, and determines a total value of the calculated required coating material amounts to be the required coating material amount in the predetermined coating region.

Further, functional components of the supply control device 250 will be described. As shown in FIG. 3, the storage unit 254 stores various types of information, data, and the like, and enables reading of the stored information, data, and the like. The storage unit 254 stores a control program of the replacement robot 210, the filling device 230, and the cleaning device 240. The control program is a computer program for causing the replacement robot 210, the filling device 230, and the cleaning device 240 to autonomously perform predetermined operations, and is executed by the supply control units 251, 252, and 253. Although not limited, in the present embodiment, the control program is a teaching program including teaching data. For example, the teaching data may include information at a plurality of teaching points related to the end effector 212 of the replacement robot 210 and information at the plurality of teaching points related to an arrangement position or the like of each cartridge 201.

The first supply control unit 251 controls operations of the robot arm 211 and the end effector 212 of the replacement robot 210 according to the teaching program. The first supply control unit 251 performs control according to a command, information, and the like received from the coating control device 130. For example, upon receiving a command to replace the cartridge 201 from the coating control device 130, the first supply control unit 251 causes the replacement robot 210 to replace the cartridge 201 of the end effector 120 of the coating robot 100 and the cartridge 201 held by the holding table 220 and corresponding to the command. The first supply control unit 251 determines the cartridge 201 to be replaced from among the cartridges 201 of the holding table 220 based on the coating material information included in the command.

The third supply control unit 253 controls an operation of the cleaning device 240 according to the teaching program. The third supply control unit 253 causes the cleaning device 240 to clean the cartridge 201 transferred from the end effector 120 to the holding table 220 by the replacement robot 210. A cleaning operation of the cartridge 201 includes removing the coating material remaining in the cartridge 201 and cleaning the coating material attached to the inside of the cartridge 201 after the removal. Upon receiving, from the first supply control unit 251, information indicating the completion of the transfer of the cartridge 201 to the holding table 220 and a position of the cartridge 201 on the holding table 220, the third supply control unit 253 causes the cleaning device 240 to clean the transferred cartridge 201 based on the information. The third supply control unit 253 may store information including the position and the like of the cartridge 201 after completion of the cleaning in the storage unit 254 or may output the information to the second supply control unit 252.

The second supply control unit 252 controls an operation of the filling device 230 according to the teaching program. Upon receiving a command to supply a required coating material amount of coating material to the coating robot 100 from the coating control device 130, the second supply control unit 252 fills the cleaned cartridge 201 in the holding table 220 with the coating material. The second supply control unit 252 controls the filling in accordance with the required coating material amount and a type of coating material included in the command. The second supply control unit 252 may acquire information on the position of the cartridge 201 after completion of the cleaning from the storage unit 254 or the third supply control unit 253, and determine the cartridge 201 to be filled using the information. The second supply control unit 252 may store, in the storage unit 254, information including the position of the cartridge 201 after completion of the filling, a filling coating material amount, the type of coating material, and the like, and may output the information to the first supply control unit 251.

### [Operation of Robot System]

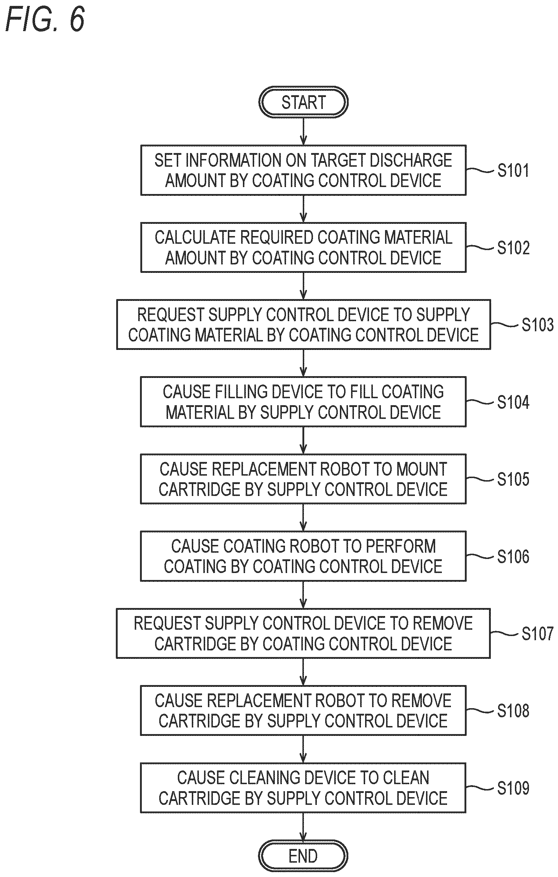

An operation of the robot system 1 according to the embodiment will be described with reference to FIG. 6. FIG. 6 is a flowchart showing an example of operations of the coating control device 130 and the supply control device 250 according to the embodiment. Hereinafter, an example of controlling a pair including one coating robot 100 and one supply device 200 will be described.

First, an operator of the robot system 1 inputs information on the target discharge amount to the coating control device 130. The coating control device 130 updates the information on the target discharge amount stored in the coating control device 130 using the input information on the target discharge amount. That is, the coating control device 130 sets information on the target discharge amount (step S101). In this step, information to be changed in the teaching data may be input to the coating control device 130. In this case, the coating control device 130 updates the teaching data stored in the coating control device 130 using the input information.

Next, the robot system 1 operates. The coating control device 130 calculates a required coating material amount in a predetermined coating region of the vehicle body V before a timing at which the coating robot 100 starts coating the predetermined coating region (step S102).

The coating control device 130 calculates a required coating material amount before a timing at which the coating robot 100 is caused to execute the teaching program. The coating control device 130 accesses the teaching program and acquires information on a teaching point corresponding to the predetermined coating region. The coating control device 130 calculates a required coating material amount using the information on the teaching point and the information on the target discharge amount. In some cases, the coating control device 130 uses specification data of the coating robot 100 to calculate a required coating material amount.

Next, the coating control device 130 outputs a request command for requesting the supply of the coating material to the supply control device 250 (step S103). The request command includes information specifying the type of coating material and the required coating material amount. At this time, the coating robot 100 is in a standby position. At the standby position, the coating robot 100 positions the end effector 120 near the holding table 220 of the supply device 200. When the coating robot 100 is not in the standby position, the coating control device 130 may cause the coating robot 100 to operate to the standby position between step S101 and S103.

Next, the supply control device 250 causes the filling device 230 to fill the cleaned cartridge 201 on the holding table 220 with the coating material (step S104). The supply control device 250 determines one cartridge 201 to be filled with the coating material from among the cleaned cartridges 201 on the holding table 220. The supply control device 250 outputs, to the filling device 230, a filling command for filling the cartridge 201 with the coating material. The filling command includes information that specifies the position of the cartridge 201 to be filled, the type of coating material to be filled, and a filling amount of coating material. The filling amount of the coating material is a required coating material amount. When the required coating material amount is larger than an amount of coating material contained in one cartridge 201, the supply control device 250 may determine two or more cartridges 201 and a filling amount of coating material of each cartridge 201. In this case, a total filling amount of the target cartridge 201 to be filled is a required coating material amount.

The filling device 230 autonomously fills the designated cartridge 201 with a designated type of coating material in the designated filling amount according to the command received from the supply control device 250. When the filling is completed, the filling device 230 notifies the supply control device 250 of completion of the filling.

Next, upon receiving the notification of completion of the filling of the coating material, the supply control device 250 controls the replacement robot 210 according to the teaching program to cause the replacement robot 210 to autonomously transfer the filled cartridge 201 from the holding table 220 and mount the cartridge 201 on the end effector 120 of the coating robot 100 (step S105). When the mounting of the cartridge 201 is completed, the supply control device 250 notifies the coating control device 130 of the completion of the mounting.

The coating control device 130 receives the notification of the completion of the mounting of the cartridge 201, and executes, that is, regenerates the teaching program at a timing of starting the coating of a coating region. The coating control device 130 controls the coating robot 100 to cause the coating robot 100 to autonomously coat a predetermined coating region using the coating material in the cartridge 201 (step S106).

Next, after the coating of the predetermined coating region is completed, the coating control device 130 moves the coating robot 100 to the standby position and positions the end effector 120 near the holding table 220. The coating control device 130 outputs, to the supply control device 250, an engagement and disengagement command for requesting removal of the used cartridge 201 from the end effector 120 (step S107).

Upon receiving the engagement and disengagement command, the supply control device 250 controls the replacement robot 210 according to the teaching program to cause the replacement robot 210 to autonomously remove the used cartridge 201 from the end effector 120 of the coating robot 100 (step S108). Further, the supply control device 250 causes the replacement robot 210 to transfer the used cartridge 201 and dispose the cartridge 201 on the holding table 220. The supply control device 250 may newly determine an arrangement position on the holding table 220 or may determine the same arrangement position as in step S105.

Next, after the arrangement of the used cartridge 201 is completed, the supply control device 250 causes the cleaning device 240 to clean the used cartridge 201 on the holding table 220 (step S109). The supply control device 250 outputs a cleaning command for cleaning the cartridge 201 to the cleaning device 240. The cleaning command includes information on the position of the used cartridge 201 to be clean. The cleaning device 240 autonomously discharges the remaining coating material from the designated cartridge 201 according to the command received from the supply control device 250, and cleans the inside of the cartridge 201 after the coating material is discharged. When the cleaning is completed, the filling device 230 may notify the supply control device 250 of the completion of the cleaning.

By performing a series of processes of step S101 to S109, the robot system 1 uses the cartridge 201 including a predetermined type of coating material in a required coating material amount to coat a predetermined coating region in a state where the excess or deficiency of the coating material is lowered.

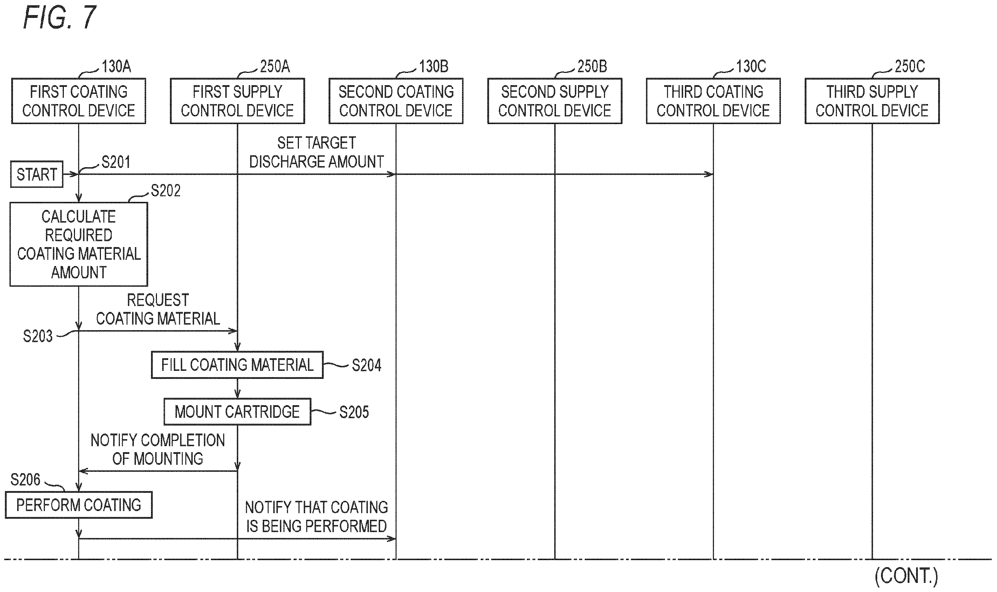

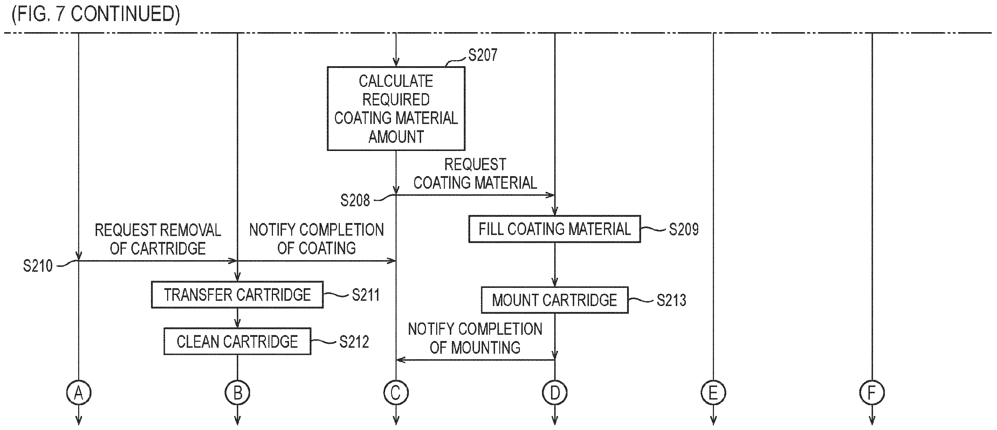

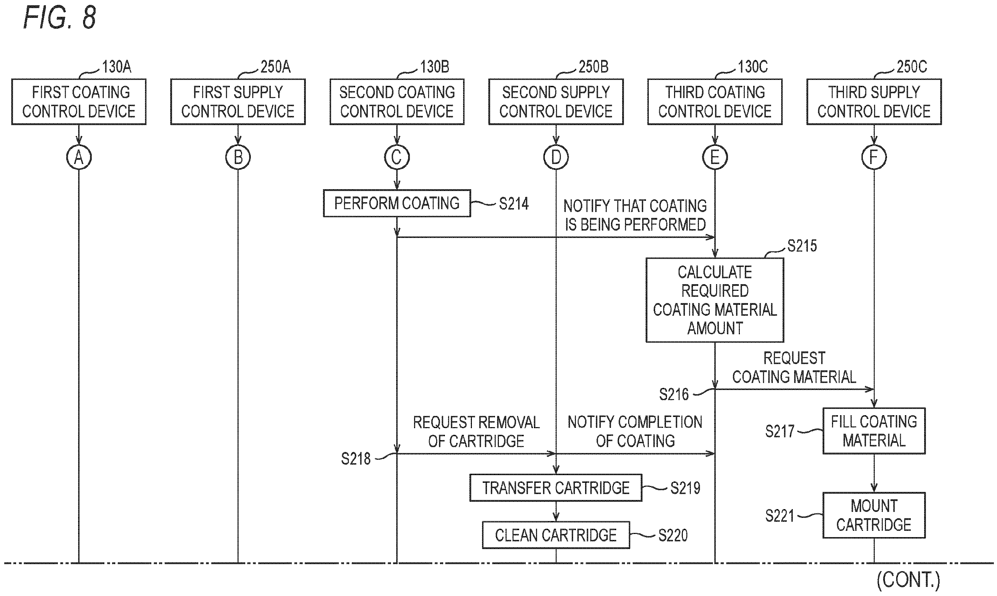

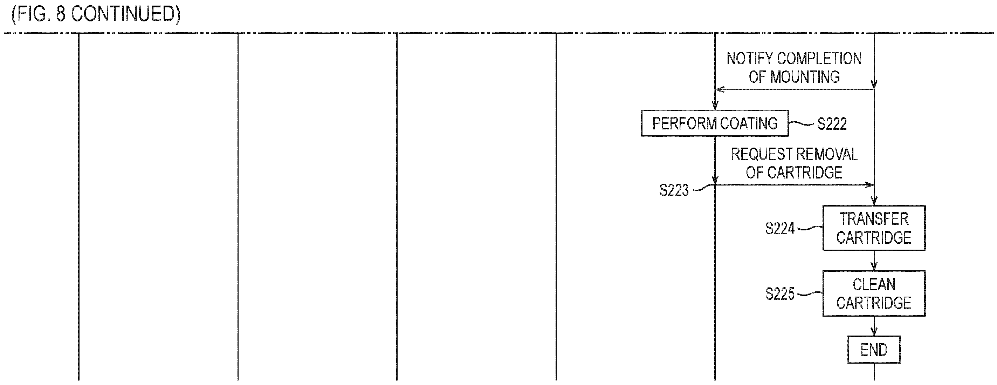

Further, a case where two or more pairs of the coating robots 100 and the supply devices 200 cooperate to coat the vehicle body V will be described. As an example, a case where three pairs of the coating robots 100 and the supply devices 200 cooperate to perform coating will be described with reference to FIGS. 7 and 8. FIGS. 7 and 8 are sequence diagrams showing an example of operations of a plurality of coating control devices 130 and a plurality of supply control devices 250 according to the embodiment. Hereinafter, among the coating robots 100 and the supply devices 200, a pair including a first coating robot 100A and a first supply device 200A is configured to coat a first coating region of the vehicle body V, a pair including a second coating robot 100B and a second supply device 200B is configured to coat a second coating region of the vehicle body V, and a pair including a third coating robot 100C and a third supply device 200C is configured to coat a third coating region of the vehicle body V

First, in accordance with the information on the target discharge amount input by the operator of the robot system 1, the coating control devices 130A, 130B, and 130C of the respective coating robots 100A, 100B, and 100C set information on the target discharge amount (step S201). In this step, information to be changed in the teaching data may be input to the coating control devices 130A, 130B, and 130C. In this case, the coating control devices 130A, 130B, and 130C update their own teaching data using the input information.

Next, when the robot system 1 operates, the first coating control device 130A calculates a required coating material amount in the first coating region before a timing at which the first coating robot 100A starts coating the first coating region (step S202).

Next, the first coating control device 130A outputs a coating material request command to the first supply control device 250A of the first supply device 200A (step S203). The first supply control device 250A causes the filling device 230 to fill the cleaned cartridge 201 on the holding table 220 with the coating material (step S204). After completion of the filling of the coating material, the first supply control device 250A causes the replacement robot 210 to mount the filled cartridge 201 on the end effector 120 of the first coating robot 100A (step S205). The first supply control device 250A outputs a notification of the completion of the mounting to the first coating control device 130A.

Upon receiving the notification of the completion of the mounting of the cartridge 201, the first coating control device 130A causes the first coating robot 100A to coat the first coating region (step S206). The first coating control device 130A outputs, to the second coating control device 130B, a notification indicating that the coating of the first coating region is being performed.

During the coating of the first coating region, the second coating control device 130B calculates a required coating material amount in the second coating region (step S207). The second coating control device 130B outputs a coating material request command to the second supply control device 250B of the second supply device 200B (step S208). The second supply control device 250B causes the filling device 230 to fill the cleaned cartridge 201 on the holding table 220 with the coating material (step S209).

After completion of the coating of the first coating region, the first coating control device 130A outputs, to the first supply control device 250A, an engagement and disengagement command for requesting removal of the used cartridge 201 from the end effector 120 (step S210). The first coating control device 130A outputs a notification of completion of the coating of the first coating region to the second coating control device 130B.

Next, the first supply control device 250A causes the replacement robot 210 to remove the used cartridge 201 from the end effector 120 of the first coating robot 100A and transfer the cartridge 201 to the holding table 220 (step S211). The first supply control device 250A causes the cleaning device 240 to clean the used cartridge 201 on the holding table 220 (step S212). The processes in step S211 and S212 may be performed at any timing after the completion of the coating of the first coating region.

After completion of the filling of the coating material, the second supply control device 250B causes the replacement robot 210 to mount the filled cartridge 201 on the end effector 120 of the second coating robot 100B (step S213). The second supply control device 250B outputs a notification of the completion of the mounting to the second coating control device 130B. In the present example, the process in step S213 is performed between the process in step S211 and the process in step S212 during a period from the completion of the coating of the first coating region to the start of the coating of the second coating region, but the present disclosure is not limited thereto. The processes in step S213 may be performed at any timing before the start of the coating of the second coating region.

Upon receiving the notification of the completion of the coating of the first coating region and the notification of the completion of the mounting of the cartridge 201, the second coating control device 130B causes the second coating robot 100B to coat the second coating region (step S214). The second coating control device 130B outputs, to the third coating control device 130C, a notification indicating that the coating of the second coating region is being performed.

During the coating of the second coating region, the third coating control device 130C calculates a required coating material amount in the third coating region (step S215). The third coating control device 130C outputs a coating material request command to the third supply control device 250C of the third supply device 200C (step S216). The third supply control device 250C causes the filling device 230 to fill the cleaned cartridge 201 on the holding table 220 with the coating material (step S217).

After completion of the coating of the second coating region, the second coating control device 130B outputs, to the second supply control device 250B, an engagement and disengagement command for requesting removal of the used cartridge 201 from the end effector 120 (step S218). The second coating control device 130B outputs a notification of completion of the coating of the second coating region to the third coating control device 130C.

Next, the second supply control device 250B causes the replacement robot 210 to remove the used cartridge 201 from the end effector 120 of the second coating robot 100B and transfer the cartridge 201 to the holding table 220 (step S219). The second supply control device 250B causes the cleaning device 240 to clean the used cartridge 201 on the holding table 220 (step S220). The processes in step S219 and S220 may be performed at any timing after the completion of the coating of the second coating region.

After completion of the filling of coating material, the third supply control device 250C causes the replacement robot 210 to mount the filled cartridge 201 on the end effector 120 of the third coating robot 100C (step S221). The third supply control device 250C outputs a notification of the completion of the mounting to the third coating control device 130C. In the present example, the process in step S221 is performed between the process in step S219 and the process in step S220 during a period from the completion of the coating of the second coating region to the start of the coating of the third coating region, but the present disclosure is not limited thereto. The process in step S221 may be performed at any timing before the start of the coating of the third coating region.

Upon receiving the notification of the completion of the coating of the second coating region and the notification of the completion of the mounting of the cartridge 201, the third coating control device 130C causes the third coating robot 100C to coat the third coating region (step S222). After completion of the coating of the third coating region, the third coating control device 130C outputs, to the third supply control device 250C, an engagement and disengagement command for requesting removal of the used cartridge 201 from the end effector 120 (step S223). The third supply control device 250C causes the replacement robot 210 to remove the used cartridge 201 from the end effector 120 of the third coating robot 100C and transfer the cartridge 201 to the holding table 220 (step S224). The third supply control device 250C causes the cleaning device 240 to clean the used cartridge 201 on the holding table 220 (step S225).

By performing a series of processes in step S201 to S225, the robot system 1 coats each of the three coating regions of the vehicle body V in a state where the excess or deficiency of the coating material is lowered, using the three cartridges 201 each including a predetermined type of coating material in a required coating material amount.

In the examples of FIGS. 7 and 8, although three supply devices 200 are disposed for each of the three coating robots 100, one supply device 200 may be disposed for two or more coating robots 100. In this case, for example, as in the processes in step S211 to S213 described above, the supply control device 250 may control the replacement robot 210 such that a process in which the replacement robot 210 removes the used cartridge 201 from the first coating robot 100A and a process in which the replacement robot 210 mounts the filled cartridge 201 on the second coating robot 100B do not overlap.

### (Other Embodiments)

Although the embodiments of the present disclosure have been described above, the present disclosure is not limited to the above-described embodiments. That is, various modifications and improvements can be made within the scope of the present disclosure. For example, embodiments obtained by applying various modifications to the embodiments and embodiments constructed by combining components in different embodiments are also included in the scope of the present disclosure.

For example, in the embodiment, the second coating control unit 132 of the coating control device 130 calculates a required coating material amount between a pairs of teaching points adjacent to each other in time series, but the present disclosure is not limited thereto. The second coating control unit 132 may be configured to calculate a required coating material amount between two teaching points such that one or more teaching points are included between the two teaching points. For example, a pair of teaching points for which the required coating material amount is to be calculated among the plurality of teaching points may be set in advance, and information on the pair may be stored in the storage unit 133 or 134.

In the embodiment, the robot arms 110 and 211 are given as an example of a vertical articulated robot arm, but the types of the robot arms 110 and 211 are not limited thereto. For example, for example, the types of the robot arms 110 and 211 may be horizontal articulated types, polar coordinate types, cylindrical coordinate types, rectangular coordinate types, or other types. The number of joints of the robot arms 110 and 211 is not limited to six.

Embodiments of the technique of the present disclosure are as follows. An information processing device according to an aspect of the present disclosure is an information processing device including a processing circuitry. The processing circuitry is configured to: access a control program of a coating robot before the coating robot performs coating; acquire, from the control program, first information related to a coating operation of the coating robot and set in the control program; and use the first information to calculate a required coating material amount, which is a coating material amount required for coating by the coating robot.

According to the above aspect, the information processing device calculates a required coating material amount using the first information that is related to the coating operation of the coating robot and is set in the control program of the coating robot. Therefore, the information processing device can calculate a required coating material amount regardless of a relation in whether the coating robot performs the coating work. Since the required coating material amount is calculated using the information set in the control program, the required coating material amount has high accuracy with respect to a required coating material amount when the coating work is actually performed. Accordingly, the information processing device can predict the required coating material amount with high accuracy before the coating is performed.

In the information processing device according to an aspect of the present disclosure, the processing circuitry acquires the first information from the control program and calculates the required coating material amount without causing the coating robot to perform coating.

According to the above aspect, the information processing device can more reliably calculate the required coating material amount before the coating robot performs coating. The information processing device can acquire the first information and calculate the required coating material amount without causing the coating robot to execute the control program.

The information processing device according to an aspect of the present disclosure further includes a storage unit configured to store second information related to a target discharge amount of coating material. The processing circuitry is configured to acquire the second information from the storage unit before the coating robot performs coating, and calculate the required coating material amount using the second information and the first information.

According to the above aspect, the information processing device calculates a required coating material amount using the first information related to the coating operation of the coating robot and the second information related to the target discharge amount of the coating material. Accordingly, the information processing device can calculate the required coating material amount with high accuracy.

In the information processing device according to an aspect of the present disclosure, the processing circuitry is configured to: receive an input of one or both of the first information and the second information; use the received first information to update the first information set in the control program; use the received second information to update the second information stored in the storage unit; and use the updated first information and the updated second information to calculate the required coating material amount.

According to the above aspect, the information processing device can receive a change in one or both of the first information and the second information and calculate the required coating material amount using the changed first information and the changed second information. Accordingly, the first information and the second information can be freely set. For example, the information processing device can receive a change in the first information related to the coating operation of the coating robot, the discharge amount, and the like and reflect the change on the required coating material amount. The information processing device can receive the second information corresponding to the capacity of a coating material discharge unit such as a coating gun used in the robot and the capacity of a gas compressor that supplies compressed gas to the coating material discharge unit, and calculate a required coating material amount corresponding to the capacity.

In the information processing device according to an aspect of the present disclosure, the control program includes teaching data for causing the coating robot to autonomously perform coating, the teaching data includes first teaching information indicating a target position of a coating material discharge unit of the coating robot at the time of coating and second teaching information indicating a target movement speed of the coating material discharge unit at the time of coating, and the processing circuitry acquires and uses the first teaching information and the second teaching information as the first information.

According to the above aspect, the information processing device calculates the required coating material amount using the first teaching information and the second teaching information. That is, the information processing device calculates the required coating material amount using the information on the target position and the target movement speed of the coating material discharge unit. Accordingly, the information processing device can calculate the required coating material amount with high accuracy.

In the information processing device according to an aspect of the present disclosure, the processing circuitry calculates a discharge time, which is a time period during which the coating material discharge unit discharges coating material, using the first teaching information and the second teaching information, and calculates the required coating material amount using the discharge time.

According to the above aspect, the information processing device can calculate the discharge time corresponding to a distance between target positions of the coating material discharge unit and the target movement speed of the coating material discharge unit between the target positions. The required coating material amount calculated using the discharge time has high accuracy.

In the information processing device according to an aspect of the present disclosure, the processing circuitry acquires information on the coating robot related to acceleration and deceleration at the time of moving the coating material discharge unit, and calculates the discharge time using the information on the coating robot, the first teaching information, and the second teaching information.

According to the above aspect, the information processing device can calculate the discharge time in consideration of the acceleration and deceleration when the movement speed of the coating material discharge unit changes. The required coating material amount calculated using the discharge time has high accuracy.

In the information processing device according to an aspect of the present disclosure, the processing circuitry calculates the required coating material amount in consideration of a first delay time from when a command to start discharge of coating material is issued to when the coating material is discharged.

According to the above aspect, in the first delay time, the target discharge amount of coating material cannot be discharged immediately after the command to start discharge is issued. The required coating material amount in consideration of the first delay time has high accuracy with respect to a required coating material amount in the actual coating.

In the information processing device according to an aspect of the present disclosure, the processing circuitry calculates the required coating material amount in consideration of a second delay time from when a command to stop discharge of the coating material is issued to when the discharge of the coating material is stopped.

According to the above aspect, in the second delay time, the coating material can be discharged even after the command to stop discharge is issued. The required coating material amount in consideration of the second delay time has high accuracy with respect to the required coating material amount in the actual coating.

In the information processing device according to an aspect of the present disclosure, the processing circuitry is further configured to execute the control program and control an operation of the coating robot.

According to the above aspect, the information processing device has a function of a robot controller. In other words, the information processing device is mounted on the robot controller and can function as a part of the robot controller. The function of the information processing device can be implemented by a computer of the robot controller. Since the information processing device does not require a device different from the robot controller, the control device can be simplified. Further, since the robot controller accesses a control program provided therein, the robot controller can reliably and quickly implement the function of the information processing device.

In the information processing device according to an aspect of the present disclosure, the processing circuitry outputs, to a supply device, a command to supply the required coating material amount of coating material to the coating robot before the coating robot performs coating.

According to the above aspect, the information processing device can cause the supply device to supply a required coating material amount of coating material calculated by the information processing device to the coating robot. The coating robot performs coating using the required coating material amount of coating material. At this time, the excess or deficiency of the coating material amount is reduced.

A robot system according to an aspect of the present disclosure includes: the coating robot; a supply device configured to supply coating material to the coating robot; and a robot controller having a function of the information processing device according to an aspect of the present disclosure and configured to control an operation of the coating robot, in which the robot controller calculates the required coating material amount before causing the coating robot to perform coating, and outputs, to the supply device, a command to supply the required coating material amount of coating material to the coating robot.

The robot system according to the above aspect implements the same function as that of the information processing device according to the aspect of the present disclosure. The robot controller can calculate a required coating material amount, cause the supply device to supply the required coating material amount of coating material to the coating robot, and cause the coating robot to perform coating with the required coating material amount of coating material.

A robot system according to an aspect of the present disclosure includes: two or more coating robots; two or more supply devices configured to supply coating material to the two or more coating robots; and two or more robot controllers each having a function of the information processing device according to an aspect of the present disclosure and configured to control an operation of each of the two or more coating robots, in which a first robot controller of the two or more robot controllers calculates a first required coating material amount required for coating by a first coating robot of the two or more coating robots before causing the first coating robot to perform coating, and outputs, to a first supply device of the two or more supply devices, a command to supply the first required coating material amount of coating material to the first coating robot, and a second robot controller of the two or more robot controllers calculates a second required coating material amount required for coating by a second coating robot of the two or more coating robots before the first coating robot completes coating, and outputs, to a second supply device of the two or more supply devices, a command to supply the second required coating material amount of coating material to the second coating robot.

The robot system according to the above aspect implements the same function as that of the information processing device according to the aspect of the present disclosure. The robot system can cause the first coating robot and the second coating robot to sequentially perform the coating work. The second robot controller outputs, to the second supply device, a command to supply a second required coating material amount of coating material to the second coating robot before the first coating robot completes the coating work. The robot system can shorten a time interval from a coating work completion timing of the first coating robot to a coating work start timing of the second coating robot. A time required for the coating work can be shortened.

In the robot system according to an aspect of the present disclosure, the first supply device and the second supply device may be the same.

According to the above aspect, the robot system can use a supply device to supply a required coating material amount of coating material to each of two coating robots, and cause the two coating robots to sequentially perform the coating work. The system can be made compact.

A coating material amount prediction method according to an aspect of the present disclosure includes: accessing a control program of a coating robot before the coating robot performs coating; acquiring, from the control program, first information that is related to a coating operation of the coating robot and is set in the control program; and using the first information to calculate a coating material amount required for coating by the coating robot.

The coating material amount prediction method according to the above aspect implements the same function as that of the information processing device according to the aspect of the present disclosure. For example, the coating material amount prediction method according to an aspect of the present disclosure may be implemented by a processor, a processing circuitry, a combination of the processing circuitry and the circuit, an IC card, a single module, or the like. The technique of the present disclosure may be a program for executing the coating material amount prediction method, or may be a non-transitory computer-readable recording medium in which the program is recorded. It is needless to say that the program can be distributed via a transmission medium such as the Internet.

The functions of the elements disclosed in the present description can be implemented using a circuit or a processing circuitry including a general-purpose processor, a dedicated processor, an integrated circuit, an ASIC, a conventional circuit, and/or a combination thereof configured or programmed to implement the disclosed functions. The processor includes a transistor and other circuits, and thus is regarded as a processing circuitry or a circuit. In the present disclosure, the circuit, the unit, and the means are hardware that implements the listed functions or hardware that is programmed to implement the listed functions. The hardware may be the hardware disclosed in the present description, or may be another known hardware configured or programmed to implement the listed functions. When the hardware is a processor considered as a kind of circuit, the circuit, the means, or the unit is a combination of hardware and software, and the software is used for the hardware and/or processor.

The numbers such as the ordinal number and the quantity used above are all illustrated for specifically describing the technique of the present disclosure, and the present disclosure is not limited to the illustrated numbers. The connection relation between the components is exemplified for specifically describing the technique of the present disclosure, and the connection relation implementing the function of the present disclosure is not limited thereto.

The division of the blocks in the functional block diagram is an example. A modification including one or more of realizing a plurality of blocks as one block, dividing one block into a plurality of blocks, and transferring some functions to other blocks may be performed in the division of the blocks. The functions of the plurality of blocks having similar functions may be processed by single hardware or software in parallel or in time division.

Since the scope of the present disclosure is defined by the appended claims rather than the descriptions of the description so that the present disclosure can be implemented in various forms without departing from the scope of the essential features thereof, the exemplary embodiments and modifications are illustrative and not limited. All changes and equivalents of the claims and the scope thereof are intended to be included in the claims.

## Claims

1. An information processing device comprising:
a processing circuitry, wherein
the processing circuitry executes a process including:
accessing a control program of a coating robot before the coating robot performs coating;
acquiring first information from the control program, the first information being related to a coating operation of the coating robot and set in the control program; and
calculating a required coating material amount which is a coating material amount required for the coating by the coating robot with the first information.

2. The information processing device according to claim 1, wherein
the processing circuitry acquires the first information from the control program and calculates the required coating material amount without causing the coating robot to perform coating.

3. The information processing device according to claim 1 or 2, further comprising:
a storage unit configured to store second information related to a target discharge amount of coating material, wherein
the processing circuitry executes the process including:
acquiring the second information from the storage unit before the coating robot performs the coating; and
calculating the required coating material amount with the second information and the first information.

4. The information processing device according to claim 3, wherein
the processing circuitry executes the process including:
receiving an input of one or both of the first information and the second information;
updating the first information set in the control program by the received first information;
updating the second information stored in the storage unit by the received second information; and
calculating the required coating material amount with the updated first information and the updated second information.

5. The information processing device according to any one of claims 1 to 4, wherein
the control program includes teaching data for causing the coating robot to autonomously perform coating,
the teaching data includes first teaching information indicating a target position of a coating material discharge unit of the coating robot at the time of coating and second teaching information indicating a target movement speed of the coating material discharge unit at the time of coating, and
the processing circuitry acquires the first teaching information and the second teaching information as the first information and uses the first information.

6. The information processing device according to claim 5, wherein
the processing circuitry calculates a discharge time which is a time period during which the coating material discharge unit discharges coating material with the first teaching information and the second teaching information, and calculates the required coating material amount with the discharge time.

7. The information processing device according to claim 6, wherein
the processing circuitry acquires information on the coating robot related to acceleration and deceleration at the time of moving the coating material discharge unit, and calculates the discharge time with the information on the coating robot, the first teaching information, and the second teaching information.

8. The information processing device according to any one of claims 1 to 7, wherein
the processing circuitry calculates the required coating material amount in consideration of a first delay time from when a command to start discharge of coating material is issued to when the coating material is discharged.

9. The information processing device according to any one of claims 1 to 8, wherein
the processing circuitry calculates the required coating material amount in consideration of a second delay time from when a command to stop discharge of the coating material is issued to when the discharge of the coating material is stopped.

10. The information processing device according to any one of claims 1 to 9, wherein
the processing circuitry executes the control program to further control an operation of the coating robot.

11. The information processing device according to any one of claims 1 to 10, wherein
the processing circuitry outputs a command to a supply device, the command being for supplying the required coating material amount of coating material to the coating robot before the coating robot performs the coating.

12. A robot system comprising:
the coating robot;
a supply device configured to supply coating material to the coating robot; and
a robot controller having a function of the information processing device according to any one of claims 1 to 11 and configured to control an operation of the coating robot, wherein
the robot controller executes the process including:
calculating the required coating material amount before causing the coating robot to perform the coating; and
outputting a command to the supply device, the command being for supplying the required coating material amount of coating material to the coating robot.

13. A robot system comprising:
two or more coating robots;
two or more supply devices configured to supply coating material to the two or more coating robots; and
two or more robot controllers each having a function of the information processing device according to any one of claims 1 to 11 and configured to control an operation of each of the two or more coating robots, wherein
a first robot controller of the two or more robot controllers executes the process including:
calculating a first required coating material amount required for the coating by a first coating robot of the two or more coating robots before causing the first coating robot to perform the coating; and
outputting a command to a first supply device of the two or more supply devices, the command being for supplying the first required coating material amount of the coating material to the first coating robot, and
a second robot controller of the two or more robot controllers executes the process including:
calculating a second required coating material amount required for the coating by a second coating robot of the two or more coating robots before the first coating robot completes the coating; and
outputting a command to a second supply device of the two or more supply devices, the command being for supplying the second required coating material amount of the coating material to the second coating robot.

14. The robot system according to claim 13, wherein
the first supply device and the second supply device are the same.

15. A coating material amount prediction method comprising:
accessing a control program of a coating robot before the coating robot performs coating;
acquiring first information from the control program, the first information being related to a coating operation of the coating robot and set in the control program; and
calculating a coating material amount required for the coating by the coating robot with the first information.
